## Europäisches Patentamt
## European Patent Office
## Office européen des brevets

(19)

(11) Numéro de publication: **0 108 182**
**B1**

(12)

# FASCICULE DE BREVET EUROPÉEN

(45) Date de publication du fascicule du brevet:
**17.12.86**

(51) Int. Cl.⁴: **B 23 B 13/04**

(21) Numéro de dépôt: **82810472.9**

(22) Date de dépôt: **05.11.82**

(54) **Dispositif guide barre pour tour multibroche.**

(43) Date de publication de la demande:
**16.05.84 Bulletin 84/20**

(45) Mention de la délivrance du brevet:
**17.12.86 Bulletin 86/51**

(84) Etats contractants désignés:
**CH DE FR GB IT LI SE**

(56) Documents cité:
**FR-A-2 241 378**
**US-A-2 548 786**

(73) Titulaire: **SAMECA S.A., Route de Diesse, CH- 2516 Lamboing (CH)**

(72) Inventeur: **Geiser, Markus, La Colline 306, CH- 2603 Péry (CH)**
Inventeur: **Vandevoir, Claude, Les Vignolans 5, CH- 2520 La Neuveville (CH)**

(74) Mandataire: **Seehof, Michel, c/o AMMANN INGENIEURS- CONSEILS EN PROPRIETE INTELLECTUELLE SA BERNE Schwarztorstrasse 31, CH- 3001 Berne (CH)**

## Description

La présente invention concerne un dispositif guide barre pour tour multibroche comprenant une pluralité de tubes de guidage, chacun desdits tubes supportant une barre à usiner en rotation un distrobuteur de fluide placé à l'arrière desdits tubes pour commander l'avance d'un piston soutenant et centrant l'arrière de ladite barre dans le tube.

De manière générale et jusqu'à présent, il n'a pas été possible d'atteindre avec un tour multibroche des vitesses de rotation des broches aussi élevées que les vitesses obtenues dans les tours monobroches de capacité égale. Cependant, l'évolution technique des outils et des huiles de coupe d'une part et les impératifs du marché d'autre part, imposent d'augmenter très nettement les vitesses de rotation des broches. En conséquence, l'évolution technique des dispositifs guide barre des tours multibroches va jouer dans le futur un rôle déterminant, étant donné que les dispositifs mécaniques actuellement en service n'arrivent plus à suivre les vitesses de broches possibles pour les tours multibroches. La capacité de production des tours multibroches va donc dépendre dans une large mesure des améliorations qui seront apportées au niveau des dispositifs guide barre. La présente invention se propose justement d'apporter de telles améliorations.

Les dispositifs connus sont constitués par un barillet en tube d'acier, l'avance de la barre étant faite, en général, par une pince d'avance situé dans la poupée du tour. En raison des faibles vitesses de rotation, il est relativement facile d'absorber le bruit engendre par les vibrations des barres en rotation, soit en plaçant des matériaux isolants autour des tubes du barillet, soit en capitonnant le tout de manière à supprimer le bruit vers l'extérieur. Ces moyens d'insonorisation ne sont toutefois pas satisfaisants, étant donné que le bruit n'est qu'une résultante des vibrations et que même si l'on réalisait une isolation acoustique parfaite, on ne supprimerait pas les vibrations de la barre qui sont transmises le long de celle-ci dans l'aire d'usinage des pièces, ce qui provoque une détérioration des états de suface et des difficultés au niveau des tolérances à respecter, ainsi que la détérioration des outils de coupe.

On connaît de la circulaire de Hermann Förch Ing, 7000 Stuttgart 80 (Vaihingen), Hauptstrasse 103, un système dit PLO qui consiste à modifier des guides barres existants de manière à utiliser l'huile ou l'émulsion de coupe de la machine pour faire une lubrification entre la barre à usiner et le tube de guidage de cette barre, afin de produire un film d'huile ou d'émulsion destiné à amortir quelque peu les vibrations de la barre en rotation. Un tel dispositif ne donne cependant pas satisfaction par le fait que l'arrière de la barre n'est pas soutenu ou centré, de sorte que cette barre est flottante et qu'elle vient battre la paroi intérieure du tube de guidage. Il en résulte du bruit et les vibrations sont transmises le long de la barre dans la zone d'usinage. Le client n'a pas le choix du fluide à utiliser. Il est obligé d'utiliser dans le guide barre la même huile ou eau de refroidissement qui est utilisée dans la zone d'usinage de la barre. Ces deux conditions sont totalement incompatibles. Les fluides susceptibles de réaliser un palier hydrodynamique dans une telle application n'ont pas les mêmes caractéristiques telles que viscosité, emulsion, etc que le fluide (par exemple eau de savon) destiné à refroidir les outils de coupe. En outre, les tubes de guidage du et des dispositifs connus sont généralement en construction mécano-soudée. Le diamètre intérieur des tubes du barillet étant choisi en fonction de la capacité maximale du tour. Il n'est donc pas possible de choisir le diamètre intérieur selon les besoins. Il est d'autre part connu que pour réaliser une sustentation hydrodynamique, il faut pouvoir adapter le diamètre intérieur des tubes au diamètre et profils des matières à usiner, et ceci en fonction des vitesses de rotation que l'on désire atteindre. Par le fait que le dispositif connu est prévu pour s'adapter à une construction déjà existante, il est souvent difficile ou impossible de récupérer le fluide sortant à l'avant et à l'arrière des tubes de guidage.

Le brevet US-A- 2 548 786 montre un dispositif guide barre pour tour multibroche dans lequel deux jeux de tubes de guidage sont disposés respectivement dans deux plans divergeants susceptible de basculer autour d'un axe commun situé à leur base. Chaque tube contient un piston poussoir commandé pneumatiquement pour faire avancer les barres à usiner en direction des broches du tour. A l'arrière des tubes de guidage est disposé un jeu de tubes de prolongement prévu pour recevoir les pistons poussoirs d'un jeu de tubes de guidage à ravitailler. Cependant, les barres à usiner ne sont pas soutenues dans leurs tubes de guidage respectifs par un palier hydrodynamique, de sorte que les problèmes de vibrations des barres en rotation ne sont pas résolus. Le dispositif connu ne permet donc pas de grandes vitesses de rotation des barres.

Partant de ce qui précède, le but de la présente invention est de réaliser un dispositif guide barre pour tour multibroche permettant de guider et de faire avancer les barres à usiner en supprimant les vibrations de ces dernières de manière à réduire le bruit. Le dispositif doit pouvoir s'adapter à toutes les dimensions et profils courants existants et permettre une automatisation facile du ravitaillement des barres.

Pour atteindre ce but, le dispositif selon l'invention est réalisé comme décrit dans la revendication 1.

Les revendication 2 à 11 concernent du modes particuliers de realisation de cette invention.

Par le fait que les barres sont tenues et centrées à l'arrière par un piston et qu'elles sont supportées hydrodynamiquement, au moins dans leur partie médiane, à l'intérieur de leur tube respectif, les vibrations sont très fortement diminuées et le bruit provoqué par le guide barre est inférieur au niveau du bruit du tour. Ceci permet l'utilisation du dispositif dans des tours multibroches tournant à de grandes vitesses encore non atteintes jusqu'à présent et une amélioration de la précision d'usinage. Grâce à la conception du distributeur d'huile, le ravitaillement en barres est facile et rapide, ce qui augmente la capacité de production. Le piston étant susceptible de commander l'avance de la barre dans son tube, il est possible de supprimer la pince d'avance normalement prévue sur le tour multibroche. Le déplacement du distributeur, lors du ravitaillement, peut être automatisé de manière simple et peu coûteuse.

L'invention va être décrite ci-après, à titre d'exemple et à l'aide du dessin dans lequel:

La figure 1 montre une vue longitudinale en coupe du dispositif,

La figure 2 est une coupe du dispositif selon la ligne II-II de la figure 1,

La figure 3 est une coupe du dispositif selon la ligne III-III de la figure 1,

La figure 4 est une coupe du dispositif selon la ligne IV-IV de la figure 3,

La figure 5 montre schématiquement l'automatisation du ravitaillement des barres, et

La figure 6 montre schématiquement la mise en place et le retrait automatique d'un bouchon de fermeture.

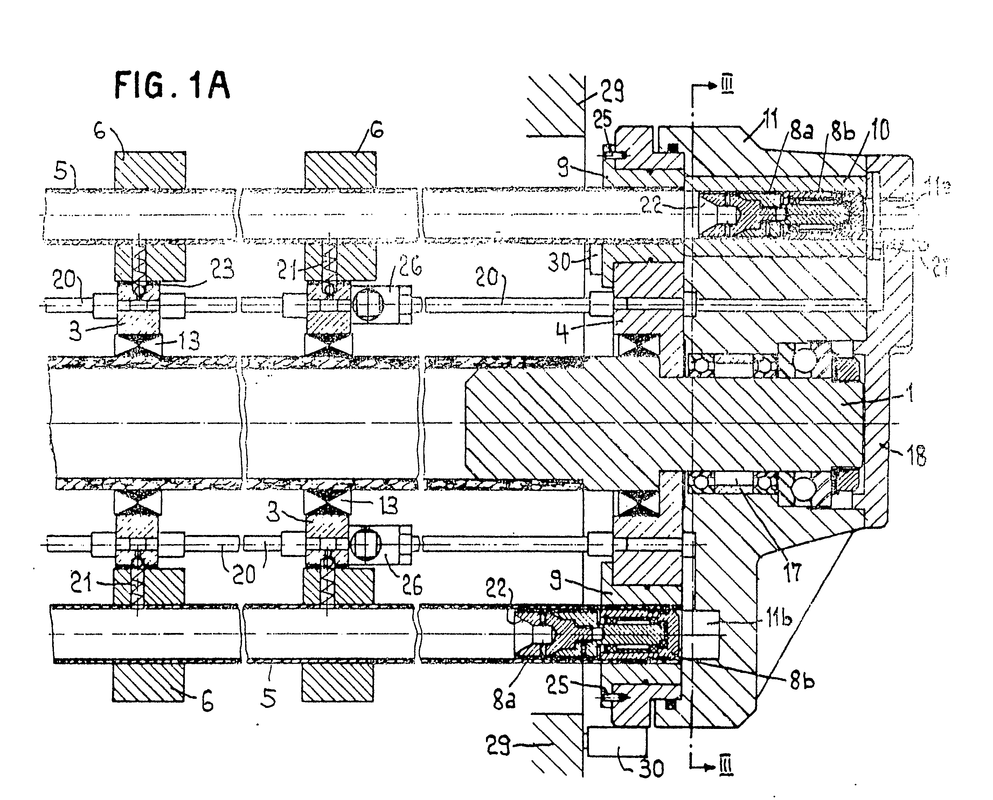

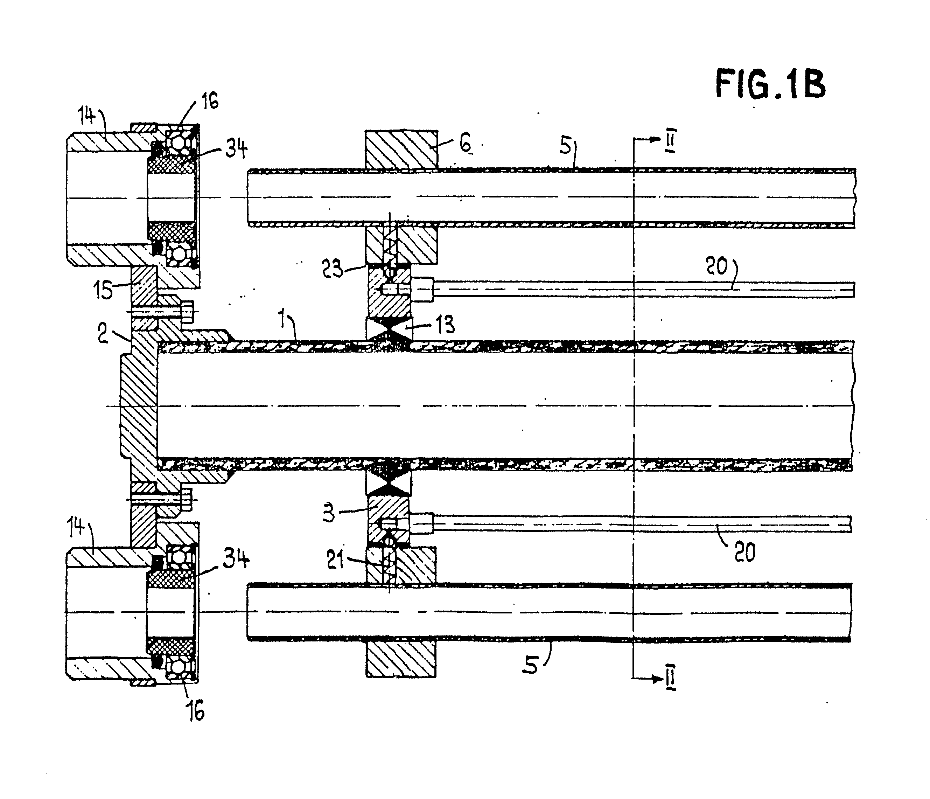

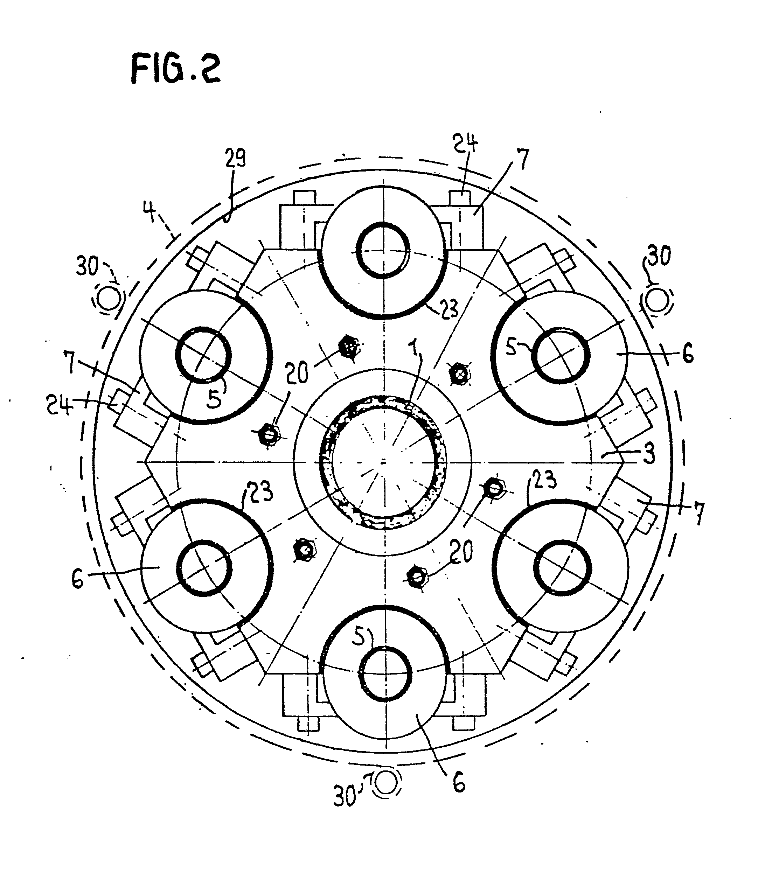

Le dispositif comprend un barillet, des tubes de guidage amovibles et un distributeur hydraulique. Selon figure 1, le barillet se compose d'un arbre central 1, d'un disque avant 2 venant se greffer sur l'arrière du tour multibroche, de disques intermédiaires 3 et d'un disque arrière 4. Les disques 3 et 4 sont montés sur l'arbre central par des bagues de serrage 13 réglables pour permettre un ajustage des disques sur l'arbre. Les tubes de guidage 5 des barres (non représentées) sont tenus dans des bagues 6 supportées par des joints 23 sur les disques intermédiaires 3 auxquels ces bagues sont fixées par des brides 7 (figure 2). Le disque 4 est monté dans une douille 9 solidaire du tube de guidage 5. Les disques 3 et 4 permettent donc de positionner et maintenir en place les tubes de guidage 5. Ces derniers sont amovibles et facilement interchangeables pour s'adapter aux dimensions des barres à usiner. Pour enlever un tube, il suffit de déserrer les boulons 24 de fixation des brides 7. Ces brides peuvent alors être tournées de 90°, ce qui permet de tirer le tube en direction de la poupée du tour, jusqu'à ce que la douille 9 se dégage du disque 4. Le tube peut alors être déposé, les clapets antiretour 21 restant fixés dans les disques 3, ce qui provoque la coupure de la distribution d'huile. Inversement, après la mise en place d'un nouveau tube, la distribution d'huile est remise en service.

Le disque arrière 4 repose sur le chassis 29 de la machine par des paliers à billes 30. Ce chassis maintient tout le dispositif en alignement avec le tour multibroche. Sur le disque 2 sont montées des lunettes de centrage 14 fixées par des brides 15 à ce disque 2. Ces lunettes de centrage comportent des roulements à billes 16 et permettent au moyen de bagues support amovibles 34 dont le diamètre et le profil peuvent être adaptés au diamètre et au profil des barres à usiner, de soutenir les barres, voir le piston, entre l'extrémité des tubes de guidage 5 et la poupée (non représentée) du tour. Elles servent donc de supports intermédiaires. Ces bagues 34 sont réalisées en matériau déformable susceptible d'eccepter les déformations des barres et d'absorber les vibrations de ces dernières.

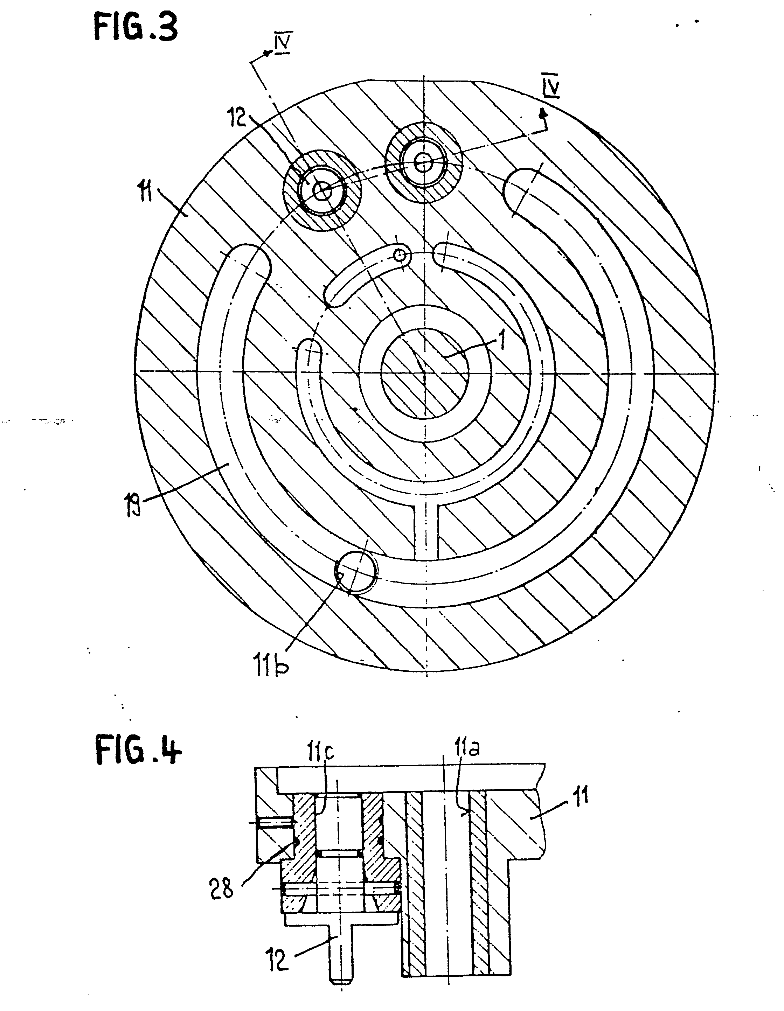

Le distributeur 11, en forme de disque solidaire de la machine est situé à l'arrière du disque 4 et il est monté sur l'arbre central 1 par un palier 17. Il est fermé à l'arrière par une plaque de fermeture 18. Le distributeur a pour fonction de distribuer l'huile sous pression lui provenant d'un groupe hydraulique (non représenté) ayant plusieurs sources de pression et de répartir cette huile dans les tubes de guidage du barillet. Dans la figure 1, l'alimentation d'huile est faite par deux sources de pression. La première source de pression alimente l'entrée 11A qui correspond à l'alimentation du tube de guidage situé dans le position de revitaillement des barres. L'entrée 11A se trouve dans le pleque de fermeture 18. La seconde source de pression est reliée à l'entrée 11B du distributeur pour l'alimentation par des gorges 19 (figure 3) de tous les autres tubes de guidage 5. A partir des entrées 11A et 11B, l'huile sous pression est distribuée par des conduites 20 dans les disques intermédiaires 3 et, à partir de ces disques, elle est injectée latéralement par des clapets antiretour 21 entre les tubes de guidage et les barres à usiner en rotation dans ces tubes, afin de permettre une sustentation hydrodynamique au moins de la partie médiane de ces barres. Dans chaque conduite 20 se trouve un régulateur de débit 26. Selon figure 4, le distributeur comprend en outre une ouverture 11C prévue pour l'introduction d'une nouvelle barre à usiner dans un tube de guidage vide se trouvant dans la position de revitaillement. Le douille 10 qui est à changer lorsque l'on change le diamètre des tubes de guidage 5, ainsi que le piston 8A, 8B font également partie du tube de guidage 5. Dans la position de ravitaillement située en face de l'entrée 11A, la longueur du distributeur 11 est telle qu'elle accepte le piston 8A, 8B entièrement retiré du tube de guidage. Le piston comporte une partie arrière 8B dont l'avance dans le tube de guidage est produite par la pression du fluide hydraulique mais qui ne tourne pas relativement à ce tube, et une partie avant 8A susceptible de tourner dans un palier de la partie arrière 8B. La partie avant 8A du piston est entraînée en rotation par la barre à usiner contre l'arrière de laquelle elle est pressée par la pression du fluide sur la partie arrière 8B.

Les éléments essentiels du dispositif étant décrits ci-dessus, examinons maintenant son fonctionnement. Dans le cas d'un cycle de travail normal, une barre à usiner est engagée dans chaque tube de guidage du barillet. Le distributeur 11 est en position de travail, l'entrée 11A se trouvant en face de la position de ravitaillement. Le tour fonctionne en cycle automatique, c'est-à-dire qu'à chaque opération il y a un indexage du barillet entraîné par le tour multibroche et une avance de la barre sur la position de ravitaillement. Dans la figure 2, le barillet est représenté avec six tubes de guidage mais il est évident qu'il peut aussi être équippé d'un nombre différent de positions. Le cycle se déroule jusqu'au moment où l'une des barres est complètement usinée. A ce moment, le tour s'arrête (il n'y a plus d'indexage) et un signal indique l'absence de barre. Il est donc nécessaire d'introduire une nouvelle barre à usiner. Pour ce faire, on met sous vide l'entrée 11A du distributeur 11, ce qui fait reculer le piston qui se trouvait à l'extrémité gauche (en figure 1) du tube de guidage vide. Ce piston pénètre dans le logement du distributeur prévu à cet effet, comme indiqué en figure 1. Pendant cette opération, tous les autres tubes restent sous pression par l'alimentation 11B. Dès que le piston 8A, 8B du tube vide est reçu dans le logement du distributeur 11, une quittance est donnée par un poussoir 27 agissant par exemple sur un minirupteur (non réprésenté) et le distributeur avec le piston 8A, 8B est mis en rotation manuellement ou automatiquement autour de l'axe du tube central 1 de manière à présenter la position 11C en face du tube vide. Le bouchon 12 fermant l'arrière de l'ouverture 11C est enlevé et une nouvelle barre est introduite à travers cette ouverture dans le tube de guidage. Le bouchon 12 est alors remis en place, le distributeur 11 est tourné autour de l'axe du tube central 1 jusqu'à ce que sa position 11A se trouve en face du tube que l'on vient de ravitailler et la pression d'huile est à nouveau appliquée dans l'entrée 11A de manière que le piston vienne soutenir l'arrière de la nouvelle barre introduite. A ce moment, la machine se remet en marche et l'usinage se déroule jusqu'au prochain signal "fin de barre".

L'indexage, dans un cycle de travail normal, s'effectue normalement dans un temps d'une fraction de seconde. Au cours de cette opération, la pression d'huile de l'entrée 11A sur le piston qui se trouve dans le tube qui quitte la position de travail 11A n'agit plus pendant une fraction de seconde sur l'arrière de ce piston, mais ceci est sans conséquence pour le bon fonctionnement du dispositif par le fait que la partie arrière des tubes de guidage, remplie d'huile sous pression, agit comme un accumulateur et que la pression n'a pas le temps de chûter au dessous de la pression minimale requise durant un laps de temps aussi court. Le passage d'un tube de la position de ravitaillement à la position suivante se fait obligatoirement par la position 11C et le bouchon 12 est rendu étanche par un joint 28 pour empêcher l'huile de s'échapper par cette l'ouverture lors de ce passage.

Dans le dispositif tel que décrit ci-dessus, l'arrière des barres à usiner est continuellement soutenu et centré par la partie avant 8A du piston qui tourne avec la barre. Ceci permet d'éviter que l'arrière de la barre flotte dans son tube et vienne battre la paroi interne de ce tube. En outre, les vibrations de la barre soutenue à l'avant dans les lunettes de centrage 14 et à l'arrière par le piston sont surtout éliminées grâce au palier hydrodynamique qui évite tout contact métallique entre la barre en rotation et le tube de guidage stationnaire. Il en résulte un fonctionnement beaucoup plus silencieux, le niveau du bruit du dispositif étant inférieur à celui du tour multibroche et une amélioration de la précision de l'usinage et des états de surface. La détérioration des outils de coupe due aux vibrations est aussi fortement diminuée. En outre, la sustentation hydrodynamique au moins de la partie médiane des barres, combinée avec la forte diminution des vibrations permet de donner aux barres à usiner une grande vitesse de rotation dans le tube qui n'était pas réalisable jusqu'à ce jour. Le profil des barres n'est pas limité à une section ronde mais le dispositif accepte n'importe quel profil existant tel que carré, sixpans, etc. Le jeu entre la barre et la paroi interne du tube dépend de la vitesse de rotation, il est normalement compris entre 2 et 6 mm, ce qui permet un certain flottement de la partie médiane d'une barre longue dans son tube. Cependant, en raison de l'huile injectée latéralement par les clapets antiretour 21 entre la barre et la paroi interne du tube, la barre ne vient jamais en contact avec cette paroi. En fonctionnement normal, le fluide contenu dans le tube sous une pression provoquée par la turbulence due à la rotation de la barre et fonction du jeu mentionné ci-dessus s'écoule par l'extrémité gauche (figure 1) de ce tube et il est récupéré en circuit fermé dans le groupe hydraulique.

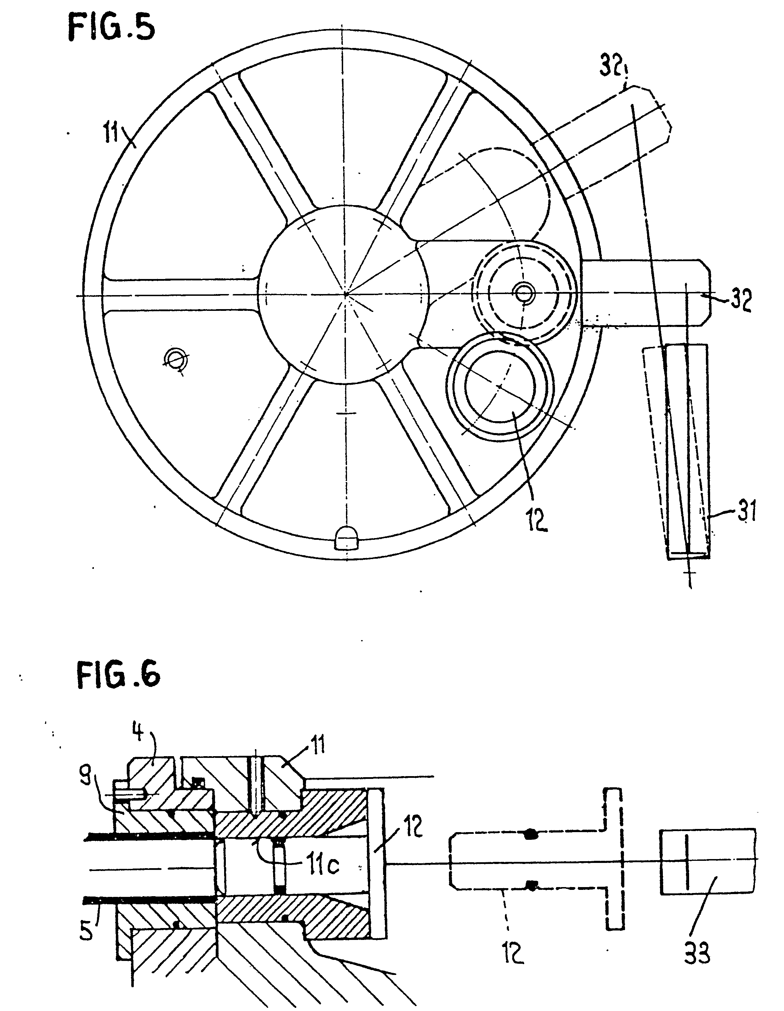

Il a été mentionné plus haut que le ravitaillement des barres peut être automatisé. Dans ce cas, et selon figure 6, au reçu de la quittance donnée par le poussoir 27, un cylindre de commande hydraulique ou pneumatique 33 retire le bouchon 12 de fermeture de l'ouverture 11C du distributeur et un second cylindre hydraulique ou pneumatique 31 (figure 5) agit ensuite sur le levier 32 de déplacement radial du distributeur 11 pour amener l'ouverture 11C en face du tube vide à ravitailler se trouvant dans la position de ravitaillement 11A, pour permettre l'insertion d'une nouvelle barre dans ce tube à travers l'ouverture 11C. L'utilisation d'un ravitailleur de barres du commerce permet alors un ravitaillement complétement automatique.

Le dispositif selon l'invention permet aussi de supprimer les pinces d'avance normalement prévues sur les tours multibroches. Dans ce but, il suffit simplement de prendre les mesures suivantes. Le piston 8A, 8B doit être allongé de manière à s'introduire sur toute sa longueur entre la lunette de centrage 14 et l'avant de la poupée du tour. Le logement prévu pour le piston dans le disbributeur 11 doit être allonge en conséquence, pour accepter entièrement le piston lors du ravitaillement des barres. Les désavantages ou inconvénients des pinces d'avance sont les suivants: elles sont coûteuses, sujettes à une usure nécessitant un recyclage, elles provoquent une détérioration de l'état de surface de la barre et elles rendent difficile l'introduction d'une nouvelle barre à usiner. La suppression de ces pinces d'avance grâce au dispositif selon l'invention apporte donc une nouvelle contribution favorable dans le domaine des tours multibroches.

**Revendications**

1. Dispositif guide barre pour tour multibroche comprenant une pluralité de tubes de guidage (5), chacun desdits tubes supportant une barre à usiner en rotation, un distributeur de fluide (11) placé à l'arrière desdits tubes pour commander l'avance d'un piston (8A, 8B) soutenant et centrant l'arrière de ladite barre dans le tube (5), caractérisé par le fait que le distributeur de fluide est adapté pour distribuer une huile ou une émulsion sous pression pour commander l'avance du piston et en même temps pour injecter ce fluide dans au moins une position devant le piston, vue dans la direction d'avancement des barres pour un support hydrodynamique des barres quand elles sont en rotation.

2. Dispositif selon la revendication 1, caractérisé par le fait que le distributeur (11) est équippé d'une seule entrée (11A, 11B) par source de pression hydraulique, ladite entrée communiquant avec des logements de distribution (19) répartissant ladite pression sur une pluralité de tubes de guidage (5) et sur une pluralité de conduites (20) d'alimentation latérale en fluide desdites barres.

3. Dispositif selon la revendication 1, caractérisé par le fait que le distributeur (11) comprend un logement destiné à recevoir ledit piston (8A, 8B), le distributeur étant susceptible d'être tourné à l'aide d'un levier (32) avec ledit piston engagé dans ledit logement autour d'un axe longitudinal du dispositif pour présenter une ouverture (11C) normalement fermée par un bouchon (12), en face d'un tube (5) en position de ravitaillement (11A), afin de permettre l'introduction d'une nouvelle barre à usiner.

4. Dispositif selon la revendication 3, caractérisé par le fait qu'il comprend un premier cylindre hydraulique ou pneumatique (33) commandant le retrait, respectivement la mise en place du bouchon (12) de fermeture de l'ouverture (11C) du distributeur (11) et un second cylindre hydraulique ou pneumatique agissant ensuite sur le levier (32) de déplacement radial du distributeur (11) pour amener l'ouverture (11C) en face du tube vide à ravitailler, pour permettre un ravitaillement automatique des barres, ledit premier cylindre (33) étant actionné au reçu d'une quittance indiquant que le piston (8a, 8B) est entiérement introduit dans ledit logement du distributeur (11).

5. Dispositif selon la revendication 1, caractérisé par le fait qu'une douille (10) peut être introduite dans le logement du piston du distributeur (11), afin de permettre l'utilisation de pistons (8A, 8B) de diamètres différents.

6. Dispositif selon la revendication 1, caracterise par le fait qu'il comprend à son extrémité antérieure, entre la sortie desdits tubes (5) et la poupée du tour, des lunettes de centrage (14) munies de bagues déformables (34) servant de supports intermédiaires pour les barres à usiner.

7. Dispositif selon la revendication 6, caractérisé par le fait que les pistons (8A, 8B) sont allongés d'une longueur correspondant à la distance entre les lunettes de centrage (14) et l'avant de la poupée et que le logement de piston dans le distributeur (11) est allongé de la même longueur.

8. Dispositif selon la revendication 1, caracterise par le fait que lesdits pistons (8A, 8B) commandent à eux seuls l'avance des barres à usiner dans lesdits tubes (5), sans l'aide des pinces d'avance normalement prévues à cet effet sur le tour multibroche.

9. Dispositif selon la revendication 1, caractérisé par le fait que les tubes de guidage (5) sont amovibles, permettant d'équipper le dispositif de tubes de différents diamètres, l'enlèvement, respectivement la mise en place d'un tube provoquant la coupure, respectivement la remise en service de toutes les connexions hydrauliques.

10. Dispositif selon la revendication 9, catactérisé par le fait que les tubes de guidage (5) postionnés radialement par des goupilles (25) sont montés sur des bagues (6) fixées par des brides (7) sur des disques intermédiaires (3) à l'aide de boulons (24) qui sont déserrés lors du changement d'un tube, pour permettre un pivotement desdites brides (7) et le retrait dudit tube en direction de la poupée du tour afin de dégager la douille (9) du disque arrière (4) et permettre la sortie dudit tube (5).

11. Dispositif selon la revendication 10, caractérisé par le fait que lors de l'enlèvement, respectivement de la mise en place d'un tube de guidage (5), les connexions hydrauliques sont coupées, respectivement remises en service par le contact de la bague (6) sur un joint (23) disposé entre les disques et la bague.

**Patentansprüche**

1. Stangenführungsvorrichtung für Mehrspindel-Drehmaschinen, mit einer Mehrzahl von Führungsrohren (5), wobei jedes Führungsrohr eine zu bearbeitende, rotierende Stange stützt, einem hinter den Führungsrohren angeordneten Fluidverteiler (11), um das Vorrücken eines Kolbens (8A, 8B), welcher den Hinterteil der Stange im Führungsrohr unterstützt und zentriert, zu steuern, dadurch gekennzeichnet, dass der Fluidverteiler dazu vorgesehen ist, Öl oder Emulsion unter Druck zu verteilen, um das Vorrücken des Kolbens zu steuern und gleichzeitig dieses Fluid an mindestens einer, in der Richtung des Vorrückens der Stangen gesehen, vor dem Kolben liegenden Stelle einzuspritzen zur hydrodynamischen Lagerung der rotierenden Stangen.

2. Vorrichtung nach Anspruch 1, dadurch gekennzeichnet, dass der Verteiler (11) einen einzigen Einlass (11A, 11B) pro hydraulische Druckquelle aufweist, wobei der Einlass mit Verteilungskanälen (19) in Verbindung steht, welche den Druck auf eine Mehrzahl von Führungsrohren (5) und auf eine Mehrzahl von Speiseleitungen (20) für eine seitliche Fluidzufuhr an den Stangen verteilen.

3. Vorrichtung nach Anspruch 1, dadurch gekennzeichnet, dass der Verteiler (11) einen Raum aufweist, um den Kolben (8A, 8B) aufzunehmen, wobei der Verteiler samt der im Raum aufgenommenen Kolben mit einem Hebel (32) um eine Längsachse der Vorrichtung gedreht werden kann, um eine normalerweise durch einen Zapfen (12) abgeschlossene Oeffnung (11C) vor ein Führungsrohr (5) in einer Versorgungsstellung (11A) zu bringen, um das Einführen einer neuen, zu bearbeitenden Stange zu erlauben.

4. Vorrichtung nach Anspruch 3, dadurch gekennzeichnet, dass sie einen ersten hydraulischen oder pneumatischen Zylinder (33), der das Entfernen bzw. das Einsetzen des Zapfens (12) steuert, der die Oeffnung (11C) des Verteilers (11) abschliesst, und einen zweiten hydraulischen oder pneumatischen Zylinder aufweist, der danach auf den Hebel (32) zur Rotationsbewegung des Verteilers (11) wirkt, um die Oeffnung (11C) vor das leere, zu versorgende Führungsrohr zu bringen, um eine automatische Versorgung der Stangen zu erlauben, wobei der erste Zylinder (33) bei Empfang einer Rückmeldung, welche angibt, dass der Kolben (8A, 8B) vollständig im Kolbenraum des Verteilers (11) eingedrungen ist, angetrieben wird.

5. Vorrichtung nach Anspruch 1, dadurch gekennzeichnet, dass eine Hülse (10) in den Kolbenraum des Verteilers (11) eingeführt werden kann, um den Gebrauch von Kolben (8A, 8B) verschiedener Durchmesser zu erlauben.

6. Vorrichtung nach Anspruch 1, gekennzeichnet durch Zentriervorrichtungen (14) mit verformbaren Ringen (34), welche als Zwischenstützen für die zu bearbeitenden Stangen dienen, wobei die Zentriervorrichtungen an der Vorderseite der Stangenführungsvorrichtung, zwischen dem Auslass der Führungsrohre und dem Spindelstock der Drehmaschine, angeordnet sind.

7. Vorrichtung nach Anspruch 6, dadurch gekennzeichnet, dass die Kolben (8A, 8B) um eine der Distanz zwischen der Zentriervorrichtungen (14) und der Vorderseite des Spindelstocks entsprechende Länge verlängert sind, und dass der Kolbenraum des Verteilers (11) um die gleiche Länge verlängert ist.

8. Vorrichtung nach Anspruch 1, dadurch gekennzeichnet, dass die Kolben (8A, 8B) das Vorrücken der zu bearbeitenden Stangen in den Führungsrohren (5) allein steuern, ohne Hilfe von Vorschubpatronen, welche auf der Mehrspindel-Drehmaschine normalerweise vorgesehen sind.

9. Vorrichtung nach Anspruch 1, dadurch gekennzeichnet, dass die Führungsrohre (5) entfernbar sind, so dass die Vorrichtung mit Führungsrohren verschiedener Durchmesser ausgerüstet werden kann, wobei das Entfernen bzw. das Einsetzen eines Rohres die Unterbrechung bzw. das Inbetriebsetzen aller hydraulischen Verbindungen bewirkt.

10. Vorrichtung nach Anspruch 9, dadurch gekennzeichnet, dass die durch Stifte (25) radial positionierten Führungsrohre (5) auf Ringen (6) angeordnet sind, welche durch Klemmen (7) mit Hilfe von Schrauben (24) auf Zwischenscheiben (3) befestigt sind, welche im Falle eines Rohrwechsels gelockert werden, um ein Schwenken der Klemmen (7) und ein Herausziehen des Rohres in Richtung des Spindelstocks der Drehmaschine zu erlauben, um die Hülse (9) von der Hinterscheibe (4) freizulegen und das Entfernen des Rohres (5) zu erlauben.

11. Vorrichtung nach Anspruch 10, dadurch gekennzeichnet, dass beim Entfernen bzw. beim Einsetzen eines Führungsrohres (5) die hydraulischen Verbindungen unterbrochen bzw. wiederhergestellt werden durch Auflage des Ringes (6) auf eine zwischen den Scheiben und dem Ring angeordnete Dichtung (23).

**Claims**

1. A guide-bar device for multi-spindle lathe, comprising a plurality of guiding tubes (5), each of said tubes rotatingly supporting a bar stock to be machined, a distributor of fluid (11) arranged at the rear part of said tubes for controlling the feed of a piston (8A, 8B) supporting and centering the rear part of said bar stock in the tube (5), characterized in that the distributor of fluid is adapted for distributing an oil or an emulsion under pressure which controls the feed of the piston and at the same time the injection of said fluid at least in one position in front of the piston as seen in the direction of advance of the bar stocks, in order to cause a hydrodynamic support for the bar stocks when they rotate.

2. A device according to claim 1, characterized in that the distributor (11) is provided with a single inlet (11A, 11B) for each source of hydraulic pressure, said inlet communicating with distributing recesses (19) which distribute said fluid under pressure to a plurality of guiding tubes (5) and on a plurality of pipes (20) for causing a lateral supply of fluid to said bar stock.

3. A device according to claim 1, characterized in that the distributor (11) comprises a housing provided for receiving said piston (8A, 8B), the distributor being capable to be rotated by means of a lever (32) about a horizontal axis of the device with said piston engaged in said housing, for bringing an opening (11C) normally closed by a plug (12) in front of a tube (5) located in a position of provisioning (11A), for permitting the insertion of a new bar stock to be machined.

4. A device according to claim 3, characterized in that it comprises a first hydraulic or pneumatic cylinder (33) controlling a withdrawal, resp. a setting in place of said plug (12) which closes said opening (11C) of the distributor (11) and a second hydraulic or pneumatic cylinder then acting on said lever (32) for causing said rotation of the distributor (11) in order to bring said opening (11C) opposite the empty tube to be provisioned for permitting automatic provisioning with bar stocks, said first cylinder (33) being operated under reception of a signal indicating that said piston (8A, 8B) is fully engaged in said housing of the distributor (11).

5. A device according to claim 1, characterized in that a sleeve (10) may be inserted into the piston's housing of the distributor (11) for permitting the use of pistons (8A, 8B) of different diameters.

6. A device according to claim 1, characterized in that it comprises at its front end centering groins (14) located between the outlet of said tubes (5) and the head stock of the lathe, said centering groins being provided with deformable cushions (34) serving as intermediate supports for the bar stocks to be machined.

7. A device according to claim 6, characterized in that said pistons (8A,8B) are lengthened by an amount corresponding to the distance between the centering groins (14) and the front part of the head stock and in that the housing of the piston in the distributor (11) is lengthened by the same amount.

8. A device according to claim 1, characterized in that the advance of the bar stocks to be machined in said tubes (5) is controlled exclusively by said pistons (8A, 8B), without any feed collet normally encountered for this purpose on said multi-spindle lathe.

9. A device according to claim 1, characterized in that the guiding tubes (5) are removable which permits to provide the device with tubes of different diameters, the removal, respectively the setting in place of a tube causing the cutting, respectively the resetting into service of all hydraulic connections.

10. A device according to claim 9, characterized in that the guiding tubes (5) positioned radially by pins (25) are mounted on collars (6) fastened by clamps (7) on intermediate disks (3) by means of bolts (24) which are loosened when a tube is to be changed, for permitting a rotation of said clamps (7) and a withdrawal of said tube in the direction of the head stock in order to disengage the sleeve (9) from the rear disk (4), thus permitting the removal of the tube (5).

11. A device according to claim 10, characterized in that at the time of removing, respectively setting in place of a guiding tube (5), the hydraulic connections are cut, respectively resetted into service by the contact of the collar (6) on a joint (23) arranged between the disks and the collar.

FIG. 1A

FIG.1B

0 108 182

# FIG.2

**FIG.3**

**FIG.4**

FIG.5

11

32

32

12

31

FIG.6

4

9

11

12

11c

5

12

33

9